# EUROPÄISCHE PATENTSCHRIFT

(11) **EP 0 664 145 B1**
(45) Veröffentlichungstag und Bekanntmachung des Hinweises auf die Patenterteilung: **16.07.1997**
(21) Anmeldenummer: 94119973.9
(22) Anmeldetag: 16.12.1994
(51) Int. Cl.: B01D 53/50, B01D 53/08

(54) **Verfahren zur Reinigung von Rauchgasen**
Process for purifying combustion gases
Procédé de purification des gaz de combustion

(30) Priorität: 17.01.1994 DE 4401166
(43) Veröffentlichungstag der Anmeldung: 26.07.1995
(73) Patentinhaber: KRUPP POLYSIUS AG, 59269 Beckum (DE)
(72) Erfinder: Schmidt, Michael, Dr.rer.nat., D-59329 Wadersloh (DE); Kupper, Detlev, Dr.-Ing., D-48291 Telgte (DE); Schneberger, Jürgen, D-59320 Ennigerloh (DE)
(74) Vertreter: Tetzner, Volkmar, Dr.-Ing. Dr. jur.

(56) Entgegenhaltungen:
- EP-A- 0 228 111
- DE-A- 3 304 344
- DE-A- 3 611 769
- DE-A- 3 723 381
- FR-A- 2 615 755
- GB-A- 2 146 977

## Beschreibung

Die Erfindung betrifft ein Verfahren zur Reinigung von mit Schadstoffen, insbesondere SO₂ beladenen Rauchgasen aus Industrieofenanlagen, wobei diese Rauchgase mit einem Sorbens in Berührung gebracht werden.

Aus der Praxis sind bereits allgemein verschiedene Verfahren zur Reinigung von Rauchgasen aus Großfeuerungsanlagen bzw. Industrieofenanlagen bekannt. Hiernach können verschiedene Schadstoffe insbesondere mit Hilfe von Adsorptionsmitteln, wie z.B. Aktivkohle, Aktivkoks oder dgl., aus den Rauchgasen entfernt werden.

Aus der Zeitschrift ZEMENT-KALK-GIPS, Nr. 12/1985, Seite 739, läßt sich ferner ein Vorschlag entnehmen, nach dem das in den Rauchgasen von mit fossilen Brennstoffen betriebenen Dampfkraftwerken enthaltene Schwefeldioxid dadurch gebunden und aus den Rauchgasen entfernt werden soll, daß Portland-Zement direkt in die Dampfkessel-Feuerungen eingegeben wird. Diese Art der Rauchgasentschwefelung funktioniert nur bei den in den Feuerungen herrschenden relativ hohen Brenntemperaturen, was in verschiedener Hinsicht (z.B. Beanspruchung der Eingabemittel, Handhabung, usw.) nachteilig ist.

In der GB-A-21 46 977 wird ein Entschwefelungsmittel vorgeschlagen, bei dem es sich um ein gehärtetes Produkt handelt, das durch Mischen von Zement mit Kalkstein oder Dolomit, Zugabe von Wasser und Erhärten zubereitet wird und als körniges Wärmemedium in einem Fließbett-Erhitzungsofen verwendet wird und dabei gleichzeitig als Entschwefelungsmittel wirkt, das Schwefelkomponenten im Abgas aus dem Erhitzungsofen absorbiert und eliminiert. Das Entschwefeln erfolgt hier bei Verbrennungstemperatur, d.h. in einem Temperaturbereich von etwa 650 bis 950 °C. In der Beschreibung in dieser GB-A-21 46 977 wird gerade das Mischen von Zement und Kalkstein oder Dolomit als besonders vorteilhaft hervorgehoben, während einem gehärteten Zementprodukt als Nachteil angelastet wird, daß es bei der Behandlung von heißen Abgasen aus Fließbett-Erhitzungsöfen zu unbefriedigenden Entschwefelungsergebnissen führt.

Ein weiteres Verfahren zur Reinigung von mit HF und/oder SO₂ und/oder SO₃ beladenen Abgasen aus Öfen der keramischen Industrie ist aus der DE-A-36 11 769 bekannt. Hier sollen die Abgase in der Weise gereinigt werden, daß sie durch einen Schüttschichtfilter geleitet werden, der ein Calciumsilikathydrat-Granulat enthält, dessen Granulatkörner bestimmte Mikroporen- und Makroporengehalte aufweisen. Für dieses Calciumsilikathydrat-Granulat wird vorzugsweise eine Zusammensetzung und Struktur eines Gas- oder Schaumbetons (in zerkleinerter Form) oder ein nach dem Gasbetonherstellungsverfahren produziertes Calciumsilikathydratprodukt verwendet, das vollständig aus kalkreichen Calciumsilikathydratphasen bestehen kann. Dieses als Schüttschichtfilter verwendete Granulat kann dabei in getrocknetem Zustand, aber auch vorteilhaft mit einem Feuchtigkeitsgehalt bis zu 30 Gew.-% verwendet werden. Nach einem kurz erläuterten Beispiel wurde ein zu reinigendes Abgas durch die Schüttung des Schüttschichtfilters mit 70 °C hindurchgezogen. Dabei wird noch betont, daß die Sorbtion durch höhere Rauchgastemperaturen noch verbessert werden kann.

Der Erfindung liegt nun die Aufgabe zugrunde, ein Verfahren der im Oberbegriff des Anspruches 1 vorausgesetzten Art zu schaffen, durch das mit relativ einfachen und leicht verfügbaren Mitteln zumindest eine zuverlässige Entschwefelung der insbesondere aus Industrieofenanlagen kommenden Abgase erreicht werden kann.

Diese Aufgabe wird erfindungsgemäß durch die im Kennzeichen des Anspruches 1 angegebenen Merkmale gelöst, wobei vorteilhafte Ausgestaltungen und Weiterbildungen dieser Erfindung in den Unteransprüchen angegeben sind.

Bei diesem erfindungsgemäßen Verfahren werden die mit Schadstoffen beladenen Rauchgase durch Eindüsen von Wasser auf eine Temperatur von etwa 0,5 bis 20 °C oberhalb ihrer Taupunkttemperatur eingestellt und mit einem Sorbens in Berührung gebracht, das zumindest größtenteils durch einen eine Körnung von > 1 mm aufweisenden, durch Mischen wenigstens eines handelsüblichen Zements mit Wasser hergestellten Zementstein gebildet wird.

Im Gegensatz zu den Lehren der oben beschriebenen bekannten Vorschläge können durch das erfindungsgemäße Verfahren sehr gute Entschwefelungsergebnisse erzielt werden, wenn der mit einer Körnung von > 1 mm vorliegende, feinkörnige bis kleinstückige Zementstein als Sorbens eingesetzt und mit den zu reinigenden Rauchgasen auf relativ einfache Weise in Berührung gebracht wird, beispielsweise indem ein ausreichend großes bzw. dickes Bett aus diesem Sorbens von den Rauchgasen durchströmt wird. Durch diesen Kontakt wird den Rauchgasen zumindest das darin enthaltene Schwefeldioxid sehr wirkungsvoll entzogen; im allgemeinen können durch dieses erfindungsgemäß eingesetzte Sorbens aber zumindest teilweise auch noch andere Schadstoffe aus den Rauchgasen entfernt werden.

Die zu reinigenden Rauchgase können durch die feinverteilte Zugabe (Eindüsen) von Wasser sowohl in ihrer Behandlungstemperatur (etwa 0,5 bis 20 °C oberhalb der Taupunkttemperatur) als auch in ihrem Feuchtigkeitsgehalt auf zweckmäßige Art und Weise eingestellt werden.

Das erfindungsgemäß eingesetzte Sorbens kann auf relativ einfache Weise mit überall verfügbarem, handelsüblichem Zement (z.B. Portland-Zement, Eisenportland-Zement, Hochofen-Zement oder dergleichen) als Hauptausgangsmaterial äußerst einfach hergestellt werden. Grundsätzlich kann vor allem bei verhältnismäßig einfachen Reinigungsvorgängen das erfindungsgemäß eingesetzte Sorbens einzig und allein aus körnig gemachtem Zementstein bestehen, der also nur durch Mischen wenigstens eines handelsüblichen Zements mit Wasser (und entsprechender Aushärtung) hergestellt ist. Es handelt sich hierbei also um ein äußerst einfach und kostensparend herzustellendes und leicht verfügbares Material.

Mit Schadstoffen aus den Rauchgasen beladenes Sorbens kann ferner in äußerst vorteilhafter Weise in einer Zementfabrik direkt weiterverarbeitet werden, beispielsweise indem es gemeinsam mit Zementklinker oder getrennt dazu vermahlen wird und dadurch als ein Anteil, beispielsweise als ein Gipsanteil, einem herzustellenden Zement beigemischt wird, so daß keinerlei Entsorgungsprobleme für mit Schadstoff beladenes Sorbens bestehen.

Bei diesem erfindungsgemäßen Reinigungsverfahren ist es ferner besonders vorteilhaft, daß aufgrund der Herstellung und der Verwendung des Sorbens weder ein zu entsorgender Abfallstoff noch unerwünschtes Abwasser entsteht, da das zur Einstellung der Rauchgastemperatur benötigte Wasser im Kreislauf gefahren werden kann und das Sorbens nach der Reinigung der Rauchgase - wie bereits angedeutet - in der Zementindustrie bei der Vermahlung von Klinker eingesetzt werden kann.

Bei diesem erfindungsgemäßen Verfahren wird für die Herstellung des Zementsteines Zement mit Wasser bei einem vorbestimmten Wasser/Zement-Verhältnis (= W/Z-Wert) von vorzugsweise etwa 0,05 bis 0,4 gemischt, d.h. das Verhältnis Wasser : Zement beträgt vorzugsweise 1 : 20 bis 1 : 2,5.

Der zur Bildung des erfindungsgemäß einzusetzenden Sorbens verwendete Zementstein kann grundsätzlich in jeder geeigneten und zweckmäßigen Weise sowie mit der am günstigsten erscheinenden Körnungsgröße hergestellt werden.

Gemäß einer bevorzugten Verfahrensweise kann der für das Sorbens verwendete Zementstein dadurch hergestellt werden, daß die Wasser/Zement-Mischung - beispielsweise in einer allgemein üblichen Mörtelkonsistenz - in wenigstens einen größeren Zementsteinblock geformt, dieser Zementsteinblock bei einer Lagerungszeit von etwa 1 bis 7 Tagen gehärtet bzw. verfestigt und anschließend der Zementsteinblock in Körner oder kleine Stücke gebrochen wird.

Eine andere Möglichkeit zur Herstellung des körnigen Zementsteins ergibt sich dadurch, daß die Wasser/Zement-Mischung - etwa bei entsprechender mörtelförmiger Konsistenz - in einer geeigneten Granuliervorrichtung (z.B. Granulierteller) in Granalien der gewünschten Größe geformt wird und die Granalien anschließend bei vorbestimmter Lagerungszeit zu Zementstein-Granalien gehärtet werden.

Zur Verstärkung der Reinigungswirkung des erfindungsgemäß einzusetzenden Sorbens kann es ferner zweckmäßig sein, wenn dieses Sorbens mit einer vorbestimmten Porenradienverteilung bzw. Porenstruktur hergestellt wird. Hierfür gibt es eine Reihe von Möglichkeiten, die wahlweise oder auch zumindest in teilweiser Kombination angewendet werden. Diese Porenradienverteilung kann vorteilhaft durch Zugabe von körnigen Zusatzmitteln, wie z.B. Sichtergrießen aus einer Zementmahlanlage, Bypass-Staub aus einer Zementofenanlage, vorcalciniertes Zementrohmehl oder Kohlefeuerungsaschen (insbesondere Aschen aus Wirbelschichtfeuerungen oder dgl.) oder durch Zugabe eines Luftporen- oder Schaumbildners oder durch eine entsprechende Einstellung des weiter oben erwähnten W/Z-Wertes gesteuert werden.

Darüber hinaus können die Sorptionseigenschaften des gekörnten Zementsteins noch dadurch beeinflußt werden, daß der als Sorbens zu verwendende gekörnte Zementstein mit einem vorbestimmten Calciumhydroxidgehalt hergestellt wird. Dieser Calciumhydroxidgehalt wird zweckmäßig durch den oben erwähnten W/Z-Wert und/oder die Lagerungszeit zum Härten des Zementsteins und/oder den Zusatz von Bypass-Staub aus einer Zementofenanlage, vorcalciniertem Zementrohmehl oder Kohlefeuerungsaschen eingestellt bzw. gesteuert, wobei diese Beeinflussungs- bzw. Zusatzmöglichkeiten einzeln oder auch in entsprechender Kombination mehrerer Möglichkeiten bzw. Stoffe vorgenommen werden können.

Im Hinblick auf eine besonders günstige Sorptionswirkung kann das Sorbens - in Anpassung an die jeweils zu reinigenden Rauchgase - im Bedarfsfall sowohl mit einer vorbestimmten Porenstruktur als auch mit einem vorbestimmten Calciumhydroxidgehalt eingesetzt werden, wobei dann zweckmäßig Porenstruktur und Calcium-Hydroxidgehalt bei der Herstellung des Sorbens bzw. des gekörnten Zementsteins miteinander verknüpft werden.

Im Hinblick auf die zuvor beschriebenen Einstellungsmöglichkeiten von Porenstruktur und Calciumhydroxidgehalt sei noch erwähnt, daß bei Zugabe von Aschen bzw. Flugaschen aus Kohle- bzw. Wirbelschichtfeuerungen (insbesondere sog. ZWS-Aschen) gleichzeitig eine besonders umweltfreundliche Entsorgung dieser Aschen erfolgen kann, wenn ein mit Schadstoffen aus den Rauchgasen beladenes Sorbens für die Herstellung von Zement (zusammen mit Zementklinker) weiterverarbeitet wird.

Es wird ferner im allgemeinen vorteilhaft sein, dem erfindungsgemäß verwendeten Sorbens eine vorbestimmte Festigkeit bzw. Mindestfestigkeit zu geben, was zu einer besonders zuverlässigen und gleichbleibenden Schichtung und Durchströmungsmöglichkeit des Sorbens beiträgt. Das Sorbens bzw. der dafür verwendete körnige Zementstein kann in seiner Festigkeit bzw. Härte durch einen entsprechenden W/Z-Wert und/oder durch die Lagerungszeit zum Härten des Zementsteins und/oder durch die Menge und Art von wenigstens einem Zusatzstoff eingestellt werden, wobei als Zusatzstoffe die gleichen Stoffe verwendet werden können, wie sie weiter oben als Zugabestoffe für die Einstellung der Porenradienverteilung und des Calciumhydroxidgehalts angegeben sind.

Egal in welcher Weise das Sorbens hergestellt wird, ist es zweckmäßig, es mit einer Körnung von vorzugsweise etwa 4 bis 20 mm einzusetzen. Auf diese Weise ergibt sich eine weitere Möglichkeit, die Ausbildung und Wirkung von Sorbensbetten bzw. -schichten den zu reinigenden Rauchgasen anzupassen, d.h. durch die Wahl der Körnungsgröße für das Sorbens läßt sich die Kontaktzeit der zu reinigenden Rauchgase mit dem Sorbens beeinflussen. Das Sorbens wird somit in der Regel etwa feinkörnig bis stückig, insbesondere kleinstückig sein.

In solchen Fällen, in denen neben einer wirksamen Entschwefelung auch eine weitergehende zuverlässige Entfernung anderer Schadstoffe aus den Rauchgasen erwünscht ist, kann dem körnig gemachten Zementstein zusätzlich noch ein Anteil eines kohlenstoffhaltigen, körnigen Sorptionsmateriales zugemischt werden, bei dem es sich vor allem um in an sich bekannter Weise hergestellte und speziell gealterte (in einem besonderen Alterungszustand verwendete) Aktivkohle, Aktivkoks oder Herdofenkoks handeln kann. Diese Mischung aus körnig gemachtem Zementstein und kohlenstoffhaltigem Sorptionsmaterial bildet dann in diesem Fall das erfindungsgemäß verwendete Sorbens, das mit zu reinigenden Rauchgasen in Berührung gebracht wird. Auch in diesem Falle wird es zweckmäßig sein, das verwendete kohlenstoffhaltige Sorptionsmaterial in seiner Körnigkeit bzw. Kleinstückigkeit auf die Korngrößenzusammensetzung des Zementsteins abzustimmen bzw. es an diesen Zementstein anzupassen. Durch diese erfindungsgemäße Sorbensmischung wird somit die Möglichkeit geschaffen, neben einer zuverlässigen Entschwefelung der schadstoffbeladenen Rauchgase auch noch andere Schadstoffe, wie z.B. Schwermetalle bzw. Schwermetallanteile, NHₓ oder dgl. wirksam aus den Rauchgasen zu entfernen.

Generell kann dieses erfindungsgemäße Verfahren zur Reinigung von Rauchgasen aus Großfeuerungen, Industrieofenanlagen oder dgl. angewendet werden, wobei es den jeweiligen Anwendungsfällen in äußerst vorteilhafter Weise mit einem hohen Wirkungsgrad angepaßt werden kann. Eine besonders vorteilhafte Anwendung dieses erfindungsgemäßen Verfahrens ergibt sich bei der Herstellung von Zement oder dgl., d.h. vor allem bei der Reinigung von Abgasen aus den dort eingesetzten Ofenanlagen, und hier - in Rauchgasströmungsrichtung betrachtet - bevorzugt hinter den üblicherweise verwendeten Filtereinrichtungen, wie z.B. Elektrofilter. In diesem Sinne wird es somit besonders zweckmäßig sein, wenn das Sorbens zumindest teilweise in demselben Werk hergestellt wird, in dem es auch wenigstens z.T. eingesetzt wird. Dies bezieht sich ganz besonders auf die Herstellung des körnigen Zementsteins.

Gerade bei Anwendung des erfindungsgemäßen Verfahrens in Brennofenanlagen für die Herstellung von Zement oder dgl. ergibt sich noch ein weiterer Vorteil dadurch, daß praktisch keinerlei Entsorgungsprobleme bzw. Umweltprobleme bei der Entsorgung von mit Schadstoffen beladenen Sorbens entstehen, da nämlich beladenes Sorbens beispielsweise einer Zementmahlanlage zugeführt und dort zusammen mit Zementklinker zu Zement vermahlen und in üblicher Weise gemischt werden kann. Auf diese Weise wird verbrauchte bzw. beladene Sorbens in den fertigen Zement eingebunden, ohne daß Umweltprobleme auftreten.

Bei der praktischen Durchführung des erfindungsgemäßen Rauchgasreinigungsverfahrens kann das Inberührungbringen der mit Schadstoffen beladenen Rauchgase mit dem Sorbens in jeder geeigneten Weise durchgeführt werden. Hierzu bieten sich vor allem folgende praktische Ausführungsmöglichkeiten an:
a) Das erfindungsgemäß hergestellte Sorbens wird in Form eines sich im wesentlichen vertikal bewegenden Wanderbettes von den mit Schadstoffen beladenen Rauchgasen durchströmt;
b) dieses erfindungsgemäß eingesetzte Sorbens wird in Form eines sich im wesentlichen horizontal bewegenden Wanderbettes, beispielsweise auf einem Wanderrost, von den mit Schadstoffen beladenen Rauchgasen in Querrichtung (nach dem Kreuzstromprinzip) durchströmt, wobei das Sorbens z.B. über einen Vorratsbehälter dem Wanderrost aufgegeben werden kann, dessen Vorschubgeschwindigkeit ebenso wie die Sorbens-Betthöhe variabel ist, wobei letztere etwa 30 bis 70 cm betragen kann.

Bei der Durchführung dieses erfindungsgemäßen Verfahrens kann mit Rauchgas-Strömungsgeschwindigkeiten von etwa 0,3 bis 2 m/s gearbeitet werden.

Es seien schließlich noch zwei weitere Beispiele dafür erläutert, wie das Sorbens gemäß der vorliegenden Erfindung angewendet werden kann. Diese Beispiele seien anhand einer beigefügten Graphik erläutert, in der das Verhältnis der SO₂-Konzentration in dem zu reinigenden Rauchgas vor und nach dem Durchströmen des Sorbens in Abhängigkeit von der Sorptionszeit (Behandlungszeit) dargestellt ist. In dieser Graphik ist in der Abszisse die Sorptionszeit bzw. Betriebszeit in Stunden (h) angegeben, während in der Ordinate das Konzentrationsverhältnis des SO₂ abgetragen ist, und zwar die SO₂-Konzentration des gereinigten Rauchgases nach dem Inberührungbringen mit dem Sorbens (= c_{A}) im Verhältnis zu der SO₂-Konzentration des mit Schadstoffen beladenen bzw. zu reinigenden Rauchgases vor dem Inberührungbringen mit dem Sorbens (= c_{E}).

Als Rauchgas ist in beiden Beispielen gemäß den Kurven I und II ein mit Schadstoffen beladenes Abgas einer Drehrohrofenanlage zur Herstellung von Zement gereinigt worden, und zwar erfolgte diese Reinigung nachdem das Abgas eine zugehörige Elektrofilteranlage passiert hatte. In beiden Versuchsbeispielen wurde als Sorbens im wesentlichen reiner körnig gemachter Zementstein eingesetzt. Ferner wurde in beiden Versuchsbeispielen gleich belastetes Abgas mit dem Sorbens in Berührung gebracht bzw. gereinigt, d. h. in beiden Beispielen betrug die Ausgangskonzentration an SO₂, also der Wert c_{E}, 1500 mg/Nm³. Die beiden Anwendungsbeispiele gemäß den Kurven I und II in der Graphik unterscheiden sich lediglich in den Sorptions- bzw. Betriebstemperaturen, bei denen das zu reinigende Abgas/Rauchgas mit dem Sorbens in Berührung gebracht worden ist.

Im Falle des Beispieles I lag die Sorptions- bzw. Betriebstemperatur des Rauchgases beim Kontakt mit dem Sorbens bei 4,4°C über der Taupunkttemperatur, während im Falle des Beispieles II die Sorptions- bzw. Betriebstemperatur des Abgases 10,4°C über der Taupunkttemperatur lag.

Anhand der beiden Beispielskurven I und II in der Graphik läßt sich gut erkennen, daß das Verhältnis der SO₂-Konzentration im Rauchgas nach dem Durchgang des Rauchgases durch das Sorbens im Vergleich zu vor dem Durchgang des Rauchgases durch das Sorbens (also das Verhältnis c_{A} : c_{E}) als eine Funktion der Zeit (Kontaktzeit zwischen Rauchgas und Sorbens) gesehen wird.

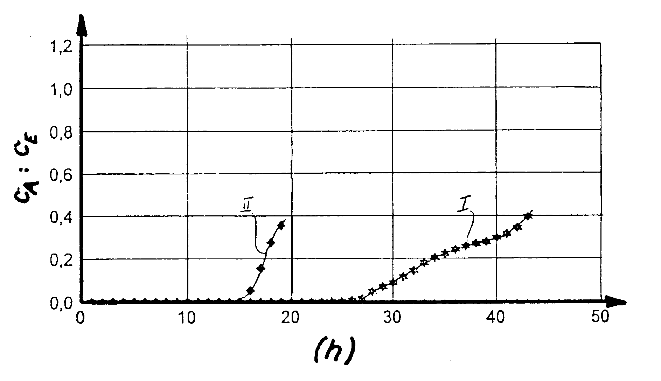

## Patentansprüche

1. Verfahren zur Reinigung von mit Schadstoffen, insbesondere mit SO₂, beladenen Rauchgasen aus Industrieofenanlagen, wobei diese Rauchgase mit einem Sorbens in Berührung gebracht werden,
dadurch gekennzeichnet,
daß die Rauchgase durch Eindüsen von Wasser auf eine Temperatur von etwa 0,5 bis 20 °C oberhalb ihrer Taupunkttemperatur eingestellt und mit einem Sorbens in Berührung gebracht werden, das zumindest größtenteils durch einen eine Körnung von > 1 mm aufweisenden, durch Mischen wenigstens eines handelsüblichen Zements mit Wasser hergestellten Zementstein gebildet wird.

2. Verfahren nach Anspruch 1, dadurch gekennzeichnet, daß für die Herstellung des Zementsteines Zement mit Wasser bei einem vorbestimmten Wasser/Zement-Verhältnis (=W/Z-Wert), vorzugsweise von etwa 0,05 bis 0,4 gemischt wird.

3. Verfahren nach Anspruch 2, dadurch gekennzeichnet, daß die Wasser/Zement-Mischung in wenigstens einen größeren Zementsteinblock geformt, bei einer Lagerungszeit von 1 bis 7 Tagen gehärtet und der Zementsteinblock anschließend in Körner oder kleine Stücke gebrochen wird.

4. Verfahren nach Anspruch 2, dadurch gekennzeichnet, daß die Wasser/Zement-Mischung in Granalien geformt wird und die Granalien anschließend bei vorbestimmter Lagerungszeit zu Zementsteingranalien gehärtet werden.

5. Verfahren nach Anspruch 2, dadurch gekennzeichnet, daß das einzusetzende Sorbens mit einer vorbestimmten Porenradienverteilung hergestellt wird, die durch Zugabe von körnigen Zusatzmitteln, wie Sichtergrießen aus einer Zementmahlanlage, Bypass-Staub aus einer Zementofenanlage, vorcalciniertes Zementrohmehl oder Kohlefeuerungsaschen, oder durch Zugabe eines Luftporen- oder Schaumbildners und/oder durch die Einstellung des W/Z-Wertes gesteuert wird.

6. Verfahren nach Anspruch 2, dadurch gekennzeichnet, daß das einzusetzende Sorbens mit einem vorbestimmten Calciumhydroxidgehalt hergestellt wird, der durch den W/Z-Wert und/oder die Lagerungszeit zum Härten des Zementsteines und/oder den Zusatz von Bypass-Staub aus einer Zementofenanlage, vorcalciniertem Zementrohmehl oder Kohlefeuerungsaschen oder einer Kombination dieser Stoffe gesteuert wird.

7. Verfahren nach den Ansprüchen 5 und 6, dadurch gekennzeichnet, daß das Sorbens sowohl mit einer vorbestimmten Porenstruktur als auch mit einem vorbestimmten Calciumhydroxidgehalt eingesetzt wird, wobei Porenstruktur und Calciumhydroxidgehalt bei der Herstellung des Sorbens miteinander verknüpft werden.

8. Verfahren nach Anspruch 3 und/oder 4, dadurch gekennzeichnet, daß das Sorbens mit einer Festigkeit eingesetzt wird, die durch den W/Z-Wert und/oder die Lagerungszeit zum Härten des Zementsteins und/oder die Menge und Art von wenigstens einem Zusatzstoff eingestellt wird.

9. Verfahren nach Anspruch 1, dadurch gekennzeichnet, daß das Sorbens mit einer Körnung von etwa 4 bis 20 mm eingesetzt wird.

10. Verfahren nach Anspruch 1, dadurch gekennzeichnet, daß dem körnig gemachten Zementstein zusätzlich ein Anteil eines kohlenstoffhaltigen, körnigen Sorp-tionsmateriales, insbesondere Aktivkohle, Aktivkoks und/oder Herdofenkoks, zugemischt und diese Mischung als Sorbens eingesetzt wird.

11. Verfahren nach Anspruch 1, dadurch gekennzeichnet, daß das Sorbens zumindest teilweise in demselben Werk hergestellt wird, in dem es eingesetzt wird.

12. Verfahren nach Anspruch 1, dadurch gekennzeichnet, daß das Sorbens in Form eines sich im wesentlichen vertikal bewegenden Wanderbettes von den mit Schadstoffen beladenen Rauchgasen durchströmt wird.

13. Verfahren nach Anspruch 1, dadurch gekennzeichnet, daß das Sorbens in Form eines sich im wesentlichen horizontal bewegenden Wanderbettes von den mit Schadstoffen beladenen Rauchgasen quer durchströmt wird.

## Claims

1. Method of purifying flue gases laden with pollutants, particularly SO₂, from industrial furnace installations, wherein these flue gases are brought into contact with a sorbent, characterised in that the flue gases are adjusted by the injection of water to a temperature of approximately 0.5 to 20°C above their dew point temperature and are brought into contact with a sorbent which is formed at least for the most part of cement stone which is produced by mixing at least a commercial cement with water and has a grain size of > 1 mm.

2. Method as claimed in Claim 1, characterised in that for the production of the cement stone cement is mixed with water in a predetermined water-cement ratio, preferably of approximately 0.05 to 0.4.

3. Method as claimed in claim 2, characterised in that the water/cement mixture is shaped into at least one relatively large cement stone block, hardened with a storage time of approximately 1 to 7 days and then the cement stone block is broken into grains or small pieces.

4. Method as claimed in Claim 2, characterised in that the water/cement mixture is shaped into granules and the granules are then hardened with a predetermined storage time to form cement stone granules.

5. Method as claimed in Claim 2, characterised in that the sorbent to be used is produced with a predetermined pore radius distribution which is controlled by the addition of granular additives, such as tailings from a cement grinding plant, bypass dust from a cement kiln installation, precalcined cement raw meal or coal furnace ashes, or by the addition of an agent forming air voids or foam and/or by the adjustment of the water-cement ratio.

6. Method as claimed in Claim 2, characterised in that the sorbent to be used is produced with a predetermined calcium hydroxide content which is controlled by the water-cement ratio and/or the storage time for hardening the cement stone and/or the addition of bypass dust from a cement kiln installation, precalcined cement raw meal or coal furnace ashes or a combination of these substances.

7. Method as claimed in Claims 5 and 6, characterised in that the sorbent is used both with a predetermined pore structure and also with a predetermined calcium hydroxide content, the pore structure and the calcium hydroxide content being linked with one another in the production of the sorbent.

8. Method as claimed in Claim 3 and/or 4, characterised in that the sorbent is used with a strength which is adjusted by the water-cement ratio and/or the storage time for hardening the cement stone and/or the quantity and type of at least one additive.

9. Method as claimed in Claim 1, characterised in that the sorbent is used with a grain size of approximately 4 to 20 mm.

10. Method as claimed in Claim 1, characterised in that a proportion of carbonaceous granular sorption material, particularly activated charcoal, activated coke or hearth furnace coke, can also be added to the granulated stone, and this mixture is used as sorbent.

11. Method as claimed in in Claim 1, characterised in that the sorbent is at least partially produced in the same works in which it is used.

12. Method as claimed in Claim 1, characterised in that the sorbent, in the form of a travelling bed which moves substantially vertically, has the pollutant-laden flue gases flowing through it.

13. Method as claimed in Claim 1, characterised in that the sorbent, in the form of a travelling bed which moves substantially horizontally, has the pollutant-laden flue gases flowing transversely through it.

## Revendications

1. Procédé d'épuration de gaz de fumée provenant d'installations à four industriel et chargés de substances nocives, en particulier de SO₂, ces gaz de fumée étant mis en contact avec un agent de sorption,
caractérisé en ce que la température des gaz de fumée est réglée par des projections d'eau à une valeur qui est supérieure à environ 0,5 à 20°C à la température de leur point de rosée et ces gaz sont mis en contact avec un agent de sorption qui est formé au moins en majeure partie de pâte de ciment après prise ayant une granulométrie > 1 mm et produite par mélange d'au moins un ciment du commerce avec de l'eau.

2. Procédé selon la revendication 1, caractérisé en ce que, pour la production de pâte de ciment après prise, du ciment est mélangé à de l'eau dans un rapport prédéterminé eau/ciment (valeur e/c) de préférence d'environ 0,05 à 0,4.

3. Procédé selon la revendication 2, caractérisé en ce que le mélange eau/ciment est mis en forme d'au moins un grand bloc de ciment après prise, il est durci pendant un temps d'entreposage de 1 à 7 jours et ensuite le bloc de pâte de ciment après prise est broyé en grains ou petits morceaux.

4. Procédé selon la revendication 2, caractérisé en ce que le mélange eau/ciment est mis en forme de granulés et les granulés sont ensuite durcis pendant un temps prédéterminé d'entreposage pour donner des granulés de pâte de ciment après prise.

5. Procédé selon la revendication 2, caractérisé en ce que l'agent de sorption à utiliser est produit avec une distribution prédéterminée de rayons de pores qui est commandée par addition d'adjuvants granuleux, par exemple de granulés provenant d'un étage séparateur d'une installation de broyage de ciment, de poussière évacuée par dérivation d'une installation à four de production de ciment, de farine brute préalablement calcinée de ciment ou de cendres d'un foyer à charbon ou par addition d'agents formateurs de pores remplis d'air ou formateurs de mousse et/ou par un réglage de la valeur de e/c.

6. Procédé selon la revendication 2, caractérisé en ce que l'agent de sorption à utiliser est produit avec une teneur prédéterminée en hydroxyde de calcium qui est commandée par la valeur de e/c et/ou par le temps d'entreposage et/ou par le durcissement de la pâte de ciment après prise et/ou par l'utilisation de poussière évacuée par dérivation et provenant d'une installation à four de fabrication de ciment, de farine crue préalablement calcinée de ciment ou de cendres de foyers à charbon ou d'une combinaison de ces matières.

7. Procédé selon les revendications 5 et 6, caractérisé en ce que l'agent de sorption est utilisé aussi bien avec une structure prédéterminée de pores qu'avec une teneur prédéterminée en hydroxyde de calcium, la structure des pores et la teneur en hydroxyde de calcium étant combinées pour la production de l'agent de sorption.

8. Procédé selon la revendication 3 et/ou 4, caractérisé en ce que l'agent de sorption s'utilise avec une compacité qui est réglée par la valeur de e/c et/ou par le temps d'entreposage destiné au durcissement de la pâte de ciment après prise et/ou la quantité et le type d'au moins un additif.

9. Procédé selon la revendication 1, caractérisé en ce que l'agent de sorption s'utilise avec une granulométrie d'environ 4 à 20 mm.

10. Procédé selon la revendication 1, caractérisé en ce qu'une fraction d'un agent de sorption granulaire contenant du carbone, en particulier du charbon actif, du coke actif et/ou du coke d'un four à sole est en plus additionnée par mélange à la pâte de ciment après prise que a été rendue granuleuse et ce mélange est utilisé en agent de sorption.

11. Procédé selon la revendication 1, caractérisé en ce que l'agent de sorption est produit au moins en partie dans la même fabrique que celle dans laquelle il est utilisé.

12. Procédé selon la revendication 1, caractérisé en se que l'agent de sorption ayant la forme d'un lit mobile et placé sensiblement verticalement est traversé par un courant de gaz de fumée chargés de substances nocives.

13. Procédé selon las revendication 1, caractérisé en ce que l'agent de sorption ayant la forme d'un lit mobile et placé sensiblement horizontalement est traversé transversalement par un courant de gaz de fumée chargés de substances nocives.
